# FASCICULE DE BREVET EUROPEEN

(11) **EP 1 628 377 B1**
(45) Date de publication et mention de la délivrance du brevet: **05.11.2014**
(21) Numéro de dépôt: 05356133.8
(22) Date de dépôt: 09.08.2005
(51) Int. Cl.: H02H 9/06, H01T 2/02

(54) **Dispositif de protection d'installations électriques contre les surtensions pourvu d'un éclateur associé à un circuit de pré-déclenchement**
Schutzvorrichtung für elektrische Anlagen gegen Überspannungen einschliesslich einer Funkenstrecke mit Zündschaltung
Protection device for electrical installations against overvoltages comprising a spark gap with a triggering circuit

(30) Priorité: 13.08.2004 FR 0408872
(43) Date de publication de la demande: 22.02.2006
(73) Titulaire: ABB France, 91978 Courtaboeuf Cedex (FR)
(72) Inventeur: Crevenat, Vincent André Lucien, 65250 Izaux (FR)
(74) Mandataire: Hirsch & Associés

(56) Documents cités:
- EP-A- 1 077 519
- US-A- 4 683 514

## Description

La présente invention se rapporte au domaine technique général des dispositifs de protection d'équipements ou d'installations électriques contre des perturbations de tension telles que des surtensions, et notamment des surtensions transitoires dues par exemple à un impact de foudre.

Les dispositifs de protection d'installations électriques contre les surtensions sont largement utilisés et peuvent être communément désignés sous l'appellation « *parafoudre* ». Ils ont en effet pour but essentiel de conduire à la terre des courants de foudre et éventuellement d'écréter les surtensions additionnelles induites par ces courants à des niveaux compatibles avec la tenue des équipements et appareils avec lesquels ils sont raccordés.

II est déjà connu d'utiliser un parafoudre à éclateur, comprenant un éclateur principal, pour protéger une installation électrique contre les surtensions. L'éclateur principal est alors, par exemple, disposé entre la phase à protéger et la terre de manière à permettre, en cas de surtensions, l'écoulement du courant de foudre à la terre.

Un éclateur est un dispositif couramment utilisé qui comprend généralement deux électrodes principales placées en vis-à-vis et séparées par un milieu isolant. Une première électrode est connectée à la phase à protéger, tandis que l'autre électrode est connectée à la terre. Lorsqu'une surtension, générée par exemple par l'arrivée d'un courant de foudre, atteint une valeur seuil dite de déclenchement, l'éclateur s'amorce et un arc électrique se forme entre les électrodes, permettant l'écoulement du courant de foudre de la phase vers la terre, et préservant ainsi l'installation électrique.

Il est également connu de commander l'amorçage de l'éclateur principal de façon anticipée, à l'aide d'un circuit de pré-déclenchement. L'éclateur principal est dans ce cas souvent muni d'une électrode de pré-déclenchement, à laquelle est connecté le circuit de pré-déclenchement. L'électrode de pré-déclenchement divise ainsi l'éclateur principal en deux éclateurs élémentaires.

Les dispositifs de protection intégrant un tel circuit de pré-déclenchement permettent avantageusement d'obtenir une tension d'amorçage de l'éclateur principal plus basse que les dispositifs de protection dépourvus d'un tel circuit.

Dans ces dispositifs, il peut arriver, suite à l'amorçage de l'éclateur principal, que ce dernier n'écoule pas la totalité du courant de foudre et qu'une partie du courant s'écoule vers la terre à travers les composants du circuit de pré-déclenchement, notamment les composants disposés entre l'électrode de pré-déclenchement et la terre. Or, ces composants ne sont généralement pas conçus pour assurer l'écoulement du courant de foudre, d'intensité importante, de telle sorte que ce phénomène peut avoir pour conséquence d'endommager le circuit de pré-déclenchement. Pour pallier ces inconvénients, il est connu de protéger le circuit de déclenchement avec une résistance, disposée en série entre l'électrode de pré-déclenchement et le circuit de pré-déclenchement, de manière à isoler sensiblement ce dernier, une fois l'éclateur principal amorcé. US 4683514 décrit un tel dispositif, selon le préambule de la revendication 1. Ce dispositif, s'il permet de protéger efficacement le circuit de pré-déclenchement, souffre cependant de plusieurs inconvénients.

Tout d'abord, la résistance utilisée en sortie du circuit de pré-déclenchement consomme une partie de l'énergie normalement destinée à l'amorçage de l'éclateur principal. Pour compenser ce phénomène, il est donc parfois nécessaire de surdimensionner les composants du circuit de pré-déclenchement, ce qui n'est pas souhaitable tant sur un plan industriel qu'économique. En outre, la présence de cette résistance impose un nouvel ajustement supplémentaire des valeurs des composants en vue d'assurer un compromis entre l'amorçage de l'éclateur d'une part et l'isolation du circuit de pré-déclenchement d'autre part.

Les objets assignés à l'invention visent par conséquent à porter remède aux différents inconvénients énumérés précédemment et à proposer un nouveau dispositif de protection d'installations électriques contre les surtensions, dans lequel le courant de foudre s'écoule principalement, voire en totalité à travers l'éclateur principal.

Un autre objet de l'invention vise à proposer un nouveau dispositif de protection pourvu d'un éclateur dont l'amorçage est maîtrisé.

Un autre objet de l'invention vise à proposer un nouveau dispositif de protection ne nécessitant qu'un nombre minimum de composants pour sa mise en oeuvre.

Un autre objet de l'invention vise à proposer un nouveau dispositif de protection ne nécessitant que des composants classiques pour sa mise en oeuvre.

Un autre objet de l'invention vise à proposer un nouveau dispositif de protection qui soit facile à fabriquer et économique.

Les objets assignés à l'invention sont atteints à l'aide d'un dispositif de protection d'installations électriques contre les surtensions, notamment les surtensions transitoires dues à un impact de foudre, selon la revendication 1.

D'autres particularités et avantages de l'invention apparaîtront et ressortiront plus en détails à la lecture de la description faite ci-après, en référence au dessins annexés, donnés à titre purement illustratif et non limitatif dans lesquels :
- La figure 1 illustre, sous la forme d'un schéma électrique de principe, un dispositif de protection contre les surtensions conforme à l'invention.
- La figure 2 illustre, sous la forme d'un schéma électrique de principe détaillé, un exemple de réalisation du dispositif de protection contre les surtensions conforme à l'invention.
- La figure 3 illustre, sous forme schématique, un mode de réalisation d'un transformateur utilisé au sein du dispositif de protection conforme à l'invention.
- La figure 4 illustre, selon une vue en coupe, le transformateur illustré sur la figure 3.

Le dispositif de protection contre les surtensions conforme à l'invention est destiné à être branché en dérivation sur l'équipement ou l'installation électrique à protéger.

L'expression « *installation électrique »* fait référence à tout type d'appareil ou réseau susceptible de subir des perturbations de tension, notamment des surtensions transitoires dues à un impact de foudre. Dans ce dernier cas, le dispositif de protection contre les surtensions est communément appelé *« parafoudre* ».

Le dispositif de protection contre les surtensions conforme à l'invention est avantageusement destiné à être disposé entre une phase de l'installation à protéger et la terre. Il est par ailleurs envisageable, sans pour autant sortir du cadre de l'invention, que le dispositif, au lieu d'être branché en dérivation entre une phase et la terre soit branché entre le neutre et la terre, entre la phase et le neutre, ou encore entre deux phases (cas d'une protection différentielle).

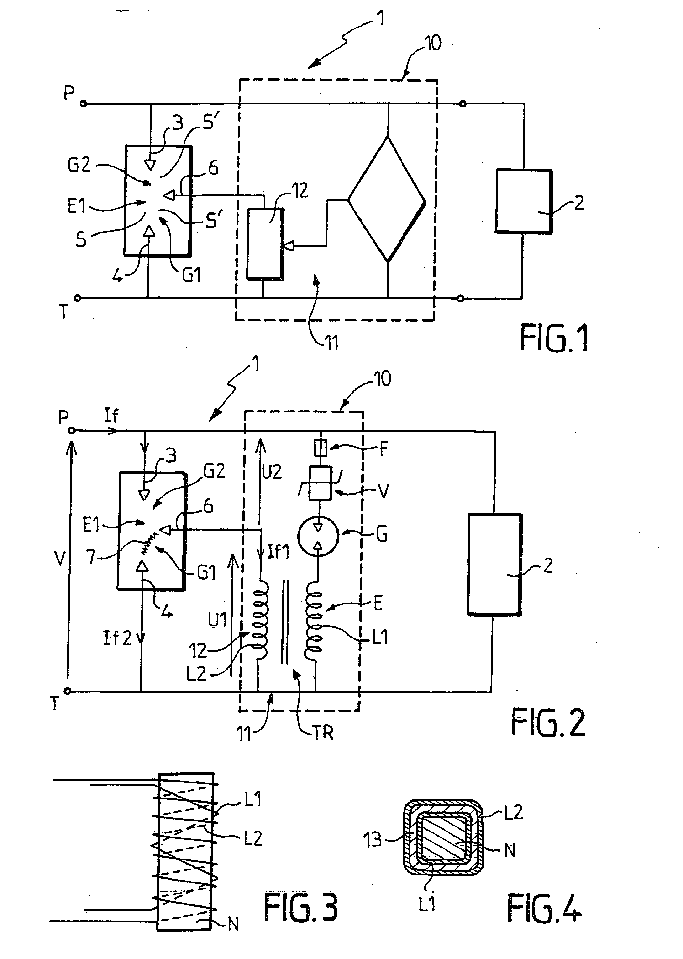

La figure 1 illustre un dispositif de protection 1 conforme à l'invention. Le dispositif de protection 1 est avantageusement monté en dérivation avec une installation électrique 2 à protéger, par exemple entre une phase P de l'installation électrique 2 à protéger et la terre T. A cet effet, le dispositif de protection 1 comporte un éclateur principal E1, monté en dérivation (ou parallèle) par rapport à l'installation électrique 2. L'éclateur principal E1 peut ainsi avantageusement être formé par un éclateur à air et comporte au moins une première et une deuxième électrodes principales 3, 4 séparées par un milieu diélectrique 5 tel qu'une lame d'air, dans lequel se produit la décharge électrique et la formation de l'arc électrique entre les électrodes principales 3, 4.

Selon l'invention, l'éclateur principal E1 comporte en outre une électrode de pré-déclenchement 6, séparée des première et deuxième électrodes principales 3, 4 par un milieu isolant 5'. L'électrode de pré-déclenchement 6 divise ainsi l'éclateur principal E1 en au moins deux éclateurs élémentaires G1, G2. Chaque électrode principale 3 ou 4 forme ainsi, avec l'électrode de pré-déclenchement 6, un éclateur élémentaire G1 ou G2.

Selon l'invention, le dispositif de protection 1 comporte en outre un circuit de pré-déclenchement 10 (illustré en pointillé) avantageusement sensible aux surtensions. Le circuit de pré-déclenchement 10 est préférentiellement monté en dérivation par rapport à l'installation électrique 2, c'est-à-dire en parallèle avec cette dernière. Plus précisément, le circuit de pré-déclenchement 10 est avantageusement connecté à l'éclateur principal E1 de manière à commander l'amorçage de ce dernier lorsqu'une surtension se produit.

Selon l'invention, et tel que cela est illustré sur la figure 1, le circuit de pré-déclenchement 10 comporte des moyens de commande 11 adaptés pour commander l'amorçage de l'éclateur principal E1 lorsqu'une surtension se produit. Les moyens de commande 11 sont à cet effet connectés à l'électrode de pré-déclenchement 6 en vue de générer, entre cette électrode de pré-déclenchement 6 et l'une des électrodes principales 3, 4, une tension suffisante pour assurer l'amorçage de l'un des éclateurs élémentaires G1, G2. Selon une caractéristique essentielle de l'invention, les moyens de commande 11 comportent une partie active 12 d'amorçage susceptible d'agir directement sur l'éclateur principal E1, via l'électrode de pré-déclenchement 6, en vue d'assurer son amorçage. La partie active 12 d'amorçage est ainsi de préférence raccordée entre l'électrode de pré-déclenchement 6 et l'une des électrodes principales 4, via la terre T.

Selon l'invention, les moyens de commande 11 sont spécifiquement conçus pour générer, en cas de surtension, une tension U1 non nulle aux bornes de leur partie active 12, cette dernière étant montée en parallèle avec l'un des deux éclateurs élémentaires G1, G2, l'éclateur monté en parallèle étant dit premier éclateur élémentaire G1. De façon préférentielle, la tension U1 aux bornes de la partie active 12 se retrouve sensiblement aux bornes du premier éclateur élémentaire G1, ces dernières étant formées par l'une des électrodes principales 4 et l'électrode de pré-déclenchement 6.

Selon une caractéristique essentielle de l'invention, les moyens de commande 11, notamment la partie active 12 de ces derniers, sont spécifiquement adaptés pour induire, aux bornes du premier éclateur élémentaire G1, une tension U1 supérieure, en valeur absolue, à la tension U2 aux bornes de l'autre éclateur élémentaire, dit deuxième éclateur élémentaire G2, de manière à ce qu'un arc électrique 7 se forme en premier lieu dans le premier éclateur élémentaire G1. Ceci permet notamment d'éviter qu'une partie du courant de foudre ne s'écoule à la terre via la partie active 12 après l'amorçage de l'éclateur principal E1. Ainsi, si l'on considère le schéma électrique illustré sur la figure 2, on constate que lorsqu'une surtension V dépassant la valeur seuil de sensibilité du circuit de pré-déclenchement 10 se produit entre la phase P à protéger et la terre T, cette surtension V induit une tension U1 aux bornes de la partie active 12, qui se répercute aux bornes du premier éclateur G1. La tension U2 aux bornes du deuxième éclateur élémentaire G2 est alors sensiblement égale à la différence entre la surtension V et la tension U1 aux bornes du premier éclateur élémentaire G1.

Si la tension U2 aux bornes du deuxième éclateur élémentaire G2 était supérieure, en valeur absolue, à la tension U1 aux bornes du premier éclateur élémentaire G1, la décharge électrique se produirait en premier dans le deuxième éclateur élémentaire G2 et ce dernier s'amorcerait en premier. Dans ce cas, il existerait un risque non négligeable qu'une partie If1 du courant de foudre If s'écoule à la terre via l'électrode de pré-déclenchement 6 et la partie active 12 des moyens de commande 11.

En revanche, le demandeur a constaté que si la tension U1 aux bornes du premier éclateur élémentaire G1, monté en parallèle avec la partie active 12, était sensiblement supérieure, en valeur absolue, à la tension U2 aux bornes du deuxième éclateur élémentaire G2, le premier éclateur élémentaire G1 s'amorçait en premier, entraînant ensuite l'amorçage de l'éclateur principal E1 entre les électrodes principales 3, 4. Dans ce cas, la totalité du courant de foudre If s'écoule à travers l'éclateur principal E1, par le biais de l'arc électrique formé entre les électrodes principales 3, 4.

Le dispositif de protection 1 conforme à l'invention permet donc de maîtriser le déclenchement des éclateurs élémentaires G1, G2 et de s'assurer ainsi que la totalité du courant de foudre If est écoulée à la terre par l'éclateur principal E1, et donc sans risque pour le circuit de pré-déclenchement 10.

Outre les moyens de commande 11, le circuit de pré-déclenchement 10 peut avantageusement comporter des éléments de coupure en tension, tels qu'un éclateur G adapté pour autoriser le passage du courant dans le circuit de pré-déclenchement 10 lorsque la tension à ses bornes atteint une valeur seuil pré-déterminée. Le circuit de pré-déclenchement 10 peut en outre comporter des éléments de limitation en tension, tels qu'une varistance V associée à un moyen de déconnexion thermique, par exemple un fusible F.

Selon une caractéristique avantageuse de l'invention, les moyens de commande 11 sont préférentiellement conçus pour générer, aux bornes de leur partie active 12, une tension U1 de même polarité que la surtension V, en considération d'un potentiel donné, par exemple celui de la terre T. De cette façon, la tension aux bornes du premier éclateur élémentaire G1, sensiblement égale à la tension U1, présente également la même polarité que la surtension V.

Avantageusement, les moyens de commande 11 comportent des moyens d'amplification de la tension, adaptés pour amplifier la tension entre leur entrée E et leur partie active 12, qui forme de préférence la sortie des moyens de commande 11. Ainsi, les moyens de commande 11 sont préférentiellement raccordés aux autres composants du circuit de pré-déclenchement 10 au niveau de leur entrée E. Les moyens de commande 11 permettent ainsi d'assurer le déclenchement de l'éclateur principal E1 pour des valeurs de la tension inférieures à la tension de déclenchement intrinsèque de l'éclateur principal E1. Ceci permet notamment d'abaisser le niveau de protection de l'installation électrique 2.

Selon une variante de réalisation préférentielle de l'invention, illustrée sur la figure 2, les moyens d'amplification sont formés par un transformateur TR de déclenchement, comportant une bobine d'induction primaire L1 et une bobine d'induction secondaire L2. La bobine d'induction secondaire L2 est avantageusement connectée à l'électrode de pré-déclenchement 6, formant ainsi la partie active 12 des moyens de commande 11. Lorsque la bobine d'induction primaire L1 est parcourue par un courant, notamment à la suite d'une surtension, la tension U1 induite aux bornes de la bobine d'induction secondaire L2 provoque l'amorçage du premier éclateur élémentaire G1, suivi de l'amorçage de l'éclateur principal E1. Tel que cela est illustré sur la figure 2, la bobine d'induction primaire L1 peut avantageusement être montée en série avec l'éclateur G et la varistance V.

L'expression *« transformateur »* fait ici référence à tout type d'association de bobines d'inductions couplées magnétiquement.

La bobine d'induction L1 est de préférence disposée au sein du circuit de pré-déclenchement 10 de façon à être traversée, lors de l'arrivée du courant de foudre If, par au moins une partie du courant de foudre de manière à générer, par couplage inductif, une tension supérieure, en valeur absolue, aux bornes de la bobine d'induction secondaire L2.

La bobine d'induction secondaire L2 est préférentiellement montée entre l'électrode de pré-déclenchement 6 et la terre T. Toutefois, il est bien évidement envisageable d'inverser le montage illustré sur la figure 2, c'est-à-dire de raccorder l'une des extrémités des bobines d'induction primaire L1 et secondaire L2 à la phase P à protéger et non à la terre T tel que cela est illustré sur la figure 2.

Selon une caractéristique particulièrement avantageuse de l'invention, le rapport de transformation r du transformateur TR de déclenchement est positif. Ceci signifie que les tensions aux bornes des bobines d'induction primaire L1 et secondaire L2 présentent la même polarité en considération d'un potentiel de référence donné, par exemple la terre T. A cet effet, les bobines d'induction primaire L1 et secondaire L2 sont préférentiellement enroulées dans le même sens. De façon encore plus préférentielle, tel que cela est illustré sur la figure 3, les bobines d'induction primaire L1 et secondaire L2 sont enroulées autour d'un même noyau magnétique N, la bobine d'induction primaire L1 étant de préférence enroulée à l'intérieur de la bobine d'induction secondaire L2 (figure 4). Les bobines d'induction primaire L1 et secondaire L2 sont avantageusement séparées par un matériau isolant 13.

Avantageusement, et tel que cela est représenté sur la figure 3, la bobine d'induction secondaire L2 possède un nombre de spires supérieur au nombre de spires de la bobine d'induction primaire L1 afin d'assurer l'amplification de la tension.

Le fonctionnement du dispositif de protection 1 conforme à l'invention va maintenant être décrit en se référant aux figures 1 à 4.

Lorsqu'une surtension V se produit, supérieure à la tension seuil de déclenchement de l'éclateur G du circuit de pré-déclenchement 10, ce dernier devient passant et un courant de foudre s'écoule dans la bobine d'induction primaire L1 générant ainsi, par couplage magnétique, une tension U1 aux bornes de la bobine d'induction secondaire L2. Cette tension U1 se retrouve sensiblement aux bornes du premier éclateur élémentaire G1. Grâce au rapport de transformation r positif et supérieur à 1 du transformateur TR, la tension U1 aux bornes du premier éclateur élémentaire G1 présente la même polarité que celle de la surtension V, mais est supérieure, en valeur absolue, à la surtension V. En effet, la tension U1 est égale au produit du rapport de transformation *r* avec la surtension V (U1 = r.V, avec r > 1). La surtension V étant égale à la somme de la tension U1 aux bornes du premier éclateur élémentaire G1 et de la tension U2 aux bornes du deuxième éclateur élémentaire G2 (V = U1 + U2), ceci implique que la tension U2 est égale, en valeur absolue, au produit de la quantité (r-1) par la surtension V ( IU21 = (r-1) . V), soit une valeur inférieure à la valeur absolue de U1 ( IU1I = r.v) puisque r est supérieur à 1. La tension U1 aux bornes du premier éclateur élémentaire G1 est donc supérieure, en valeur absolue, à la tension aux bornes du deuxième éclateur élémentaire G2, de telle sorte que le premier éclateur G1 s'amorce en premier. L'éclateur principal E1 s'amorce ensuite entre les électrodes principales 3, 4, permettant ainsi l'écoulement de la totalité du courant de foudre entre les électrodes principales 3, 4, de la phase P à protéger vers la terre T. Le deuxième éclateur élémentaire G2 n'est pas amorcé et ne permet donc pas l'écoulement d'une partie du courant de foudre vers la terre T, à travers la bobine d'induction secondaire L2.

Le dispositif de protection 1 conforme à l'invention permet donc, grâce à des moyens faciles à mettre en oeuvre, de garantir que la totalité du courant de foudre est écoulée par l'éclateur principal E1 après l'amorçage de ce dernier, et d'empêcher la détérioration du circuit de pré-déclenchement 10.

Un autre avantage du dispositif de protection 1 conforme à l'invention est qu'il permet de maîtriser le fonctionnement de l'éclateur principal E1, de telle sorte que ce dernier n'est plus sujet à un amorçage aléatoire.

## Revendications

1. Dispositif de protection d'installations électriques contre les surtensions, notamment les surtensions transitoires dues à un impact de foudre, comportant :
- un éclateur principal (E1), monté en dérivation par rapport à l'installation électrique (2), et muni d'au moins une première et une deuxième électrodes principales (3, 4) ainsi que d'une électrode de pré-déclenchement (6), ladite électrode de pré-déclenchement étant séparée des première et deuxième électrodes principales par un milieu isolant (5'), divisant ainsi l'éclateur principal en deux éclateurs élémentaires (G1, G2),
- un circuit de pré-déclenchement (10), comportant des moyens de commande (11) de l'amorçage de l'éclateur principal, connectés à l'électrode de pré-déclenchement, les moyens de commande comportant une partie active (12) et étant spécifiquement conçus pour générer, en cas de surtension, une tension (U1) non nulle aux bornes de leur partie active, ladite partie active étant montée en parallèle avec l'un des deux éclateurs élémentaires, dit premier éclateur élémentaire (G1), les moyens de commande étant adaptés pour induire, aux bornes dudit premier éclateur élémentaire, une tension (U1) supérieure, en valeur absolue, à la tension (U2) aux bornes de l'autre éclateur élémentaire, dit deuxième éclateur élémentaire (G2), de manière à ce qu'un arc électrique (7) se forme en premier lieu dans ledit premier éclateur élémentaire, lesdits moyens de commande comportant des moyens d'amplification de la tension adaptés pour amplifier la tension entre leur entrée, et leur partie active, lesdits moyens d'amplification étant formés par un transformateur (TR) de déclenchement, avec une bobine d'induction primaire (L1) et une bobine d'induction secondaire (L2),
**caractérisé en ce que** la bobine d'induction secondaire est connectée directement à l'électrode de pré-déclenchement et forme ainsi la partie active des moyens de commande, de sorte que, lorsque la bobine d'induction primaire est parcourue par un courant, la tension induite aux bornes de la bobine d'induction secondaire provoque l'amorçage du premier éclateur élémentaire.

2. Dispositif selon la revendication 1 **caractérisé en ce que** les moyens de commande (11) sont conçus pour générer, aux bornes de leur partie active (12), une tension (U1) de même polarité que la surtension (V).

3. Dispositif selon l'une quelconque des revendications 1 à 2, **caractérisé en ce que** le rapport de transformation du transformateur (TR) de déclenchement est positif.

4. Dispositif selon la revendication 3, **caractérisé en ce que** les bobines d'induction primaire (L1) et secondaire (L2) sont enroulées dans le même sens.

## Patentansprüche

1. Vorrichtung zum Schutz elektrischer Anlagen vor Überspannungen, insbesondere vor vorübergehenden Überspannungen, die auf einen Blitzschlag zurückzuführen sind, die Folgendes aufweist:
- eine Hauptfunkenstrecke (E1), die abgezweigt in Bezug auf die elektrische Anlage (2) montiert und mit mindestens einer ersten und einer zweiten Hauptelektrode (3, 4) sowie mit einer Vorauslöseelektrode (6) versehen ist, wobei die Vorauslöseelektrode von der ersten und zweiten Hauptelektrode durch ein isolierendes Milieu (5') getrennt ist, indem daher die Hauptfunkenstrecke in zwei elementare Funkenstrecken (G1, G2) geteilt wird,
- eine Vorauslöseschaltung (10), die Steuermittel (11) zum Zünden der Hauptfunkenstrecke umfasst, die mit der Vorauslöseelektrode verbunden sind, wobei die Steuermittel einen aktiven Teil (12) aufweisen und spezifisch ausgelegt sind, um bei einer Überspannung eine Spannung (U1), die nicht gleich null ist, an den Klemmen ihres aktiven Teils zu erzeugen, wobei der aktive Teil mit einer der zwei elementaren Funkenstrecken parallel installiert ist, erste elementare Funkenstrecke (G1) genannt, wobei die Steuermittel angepasst sind, um an den Klemmen der ersten elementaren Funkenstrecke eine Spannung (U1) zu induzieren, die im Absolutwert größer ist als die Spannung (U2) an den Klemmen der anderen elementaren Funkenstrecke, zweite elementare Funkenstrecke (G2) genannt, so dass sich ein Lichtbogen (7) zuerst in der ersten elementaren Funkenstrecke bildet, wobei die Steuermittel Verstärkungsmittel der Spannung aufweisen, die angepasst sind, um die Spannung zwischen ihrem Eingang und ihrem aktiven Teil zu verstärken, wobei die Verstärkungsmittel aus einem Auslösetransformator (TR) mit einer Hauptinduktionsspule (L1) und einer Hilfsinduktionsspule (L2) bestehen,
**dadurch gekennzeichnet, dass** die Hilfsinduktionsspule direkt an der Vorauslöseelektrode angeschlossen ist und daher den aktiven Teil der Steuermittel bildet, so dass, wenn die Hauptinduktionsspule von einem Strom durchlaufen wird, die an den Klemmen der Hilfsinduktionsspule induzierte Spannung das Zünden der ersten elementaren Funkenstrecke verursacht.

2. Vorrichtung nach Anspruch 1, **dadurch gekennzeichnet, dass** die Steuermittel (11) ausgelegt sind, um an den Klemmen ihres aktiven Teils (12) eine Spannung (U1) mit derselben Polung wie die Überspannung (V) zu erzeugen.

3. Vorrichtung nach einem der Ansprüche 1 bis 2, **dadurch gekennzeichnet, dass** das Teilungsverhältnis des Auslösetransformators (TR) positiv ist.

4. Vorrichtung nach Anspruch 3, **dadurch gekennzeichnet, dass** die Hauptinduktionsspule (L1) und die Hilfsinduktionsspule (L2) in dieselbe Richtung gewickelt sind.

## Claims

1. Device for protecting electrical installations against power surges, notably transient surges due to lightning strikes, comprising:
- a main spark gap (E1), mounted in parallel with respect to the electrical installation (2), and provided with at least first and second main electrodes (3, 4) and a pre-trigger electrode (6), said pre-trigger electrode being separated from the first and second main electrodes by an insulating medium (5'), thereby dividing the main spark gap (E1) into two elementary spark gaps (G1, G2),
- a pre-trigger circuit (10) comprising control means (11) for spark-over of the main spark gap, connected to the pre-trigger electrode, the control means having an active portion (12) and being specifically designed to generate, in case of surge, a non-zero voltage (U1) at the terminals of their active portion, said active portion being mounted in parallel with the one of the two elementary spark gaps, referred to as the first elementary spark gap (G1), the control means being adapted to induce, at the terminals of said first elementary spark gap, a voltage (U1) greater in absolute value than the voltage (U2) across the other elementary spark gap, referred to as the second elementary spark gap (G2), so that an electric arc (7) is initially formed in said first elementary spark gap, the control means comprising amplifying means adapted to amplify the voltage between their input and their active part, said amplification means being formed by a triggering transformer (TR) with a primary induction coil (L1) and a secondary induction coil (L2),
**characterized in that** the secondary induction coil is directly connected to the pre-triggering electrode, thereby forming the active part of the control means, such that when the primary induction coil is traversed by a current, the voltage induced at the terminals of the secondary coil causes breakdown of the first elementary spark gap.

2. Device according to claim 1 **characterized in that** the control means (11) are adapted to generate, across their active portion (12), a voltage (U1) of the same polarity as the surge (V).

3. Device according to any one of claims 1 and 2, **characterized in that** the transformation ratio of the triggering transformer (TR) is positive.

4. Device according to claim 3, **characterized in that** the primary induction coil (L1) and secondary induction coil (L2) are wound in the same direction.
